# EUROPÄISCHE PATENTANMELDUNG

(11) **EP 1 403 155 A2**
(43) Veröffentlichungstag der Anmeldung: **31.03.2004**
(21) Anmeldenummer: 03005912.5
(22) Anmeldetag: 17.03.2003
(51) Int. Cl.: B60S 1/08

(54) **Symmetrischer Antrieb für Wischerkomponenten**

(30) Priorität: 30.09.2002 DE 10245663
(71) Anmelder: ROBERT BOSCH GMBH, 70442 Stuttgart (DE)
(72) Erfinder: Neubauer, Achim, 76547 Sinzheim-Vormberg (DE); Moench, Jochen, 76547 Sinzheim (DE)

(57) **Zusammenfassung**

Die Erfindung bezieht sich auf eine Antriebseinheit für Wischanlagen mit von einem Gehäuse (2,3;91) umschlossenen Antriebsmotor, dem ein Getriebe (13,30,50,60,80,90) zugeordnet ist, dessen Abtriebswelle (5,40,65,97) Wischkomponenten antreibt. An dem Gehäuse (2,3;91) sind eine Anschlußstelle (27) für eine Ansteuer- und Regelelektronik sowie zur Anbindung an ein Bordnetz eines Fahrzeuges sowie Positionsgeber (12) vorgesehen. Die Abtriebswelle (5,40) liegt entweder koaxial zur Motorwelle einer rotationssymmetrisch ausgeführten Motor- und Getriebeeinheit (1,30,50,80) oder die Symmetrieachse (93) der Motor- und Getriebeeinheit (60,90) liegt in einer Spiegelebene (78).

## Beschreibung

### Technisches Gebiet

An Fahrzeugen kommen zur Reinigung von Sicht-, Scheinwerfer- und Spiegel Scheibenwischer zum Einsatz. Der Antrieb der Wischer erfolgt üblicherweise durch Elektroantriebe und verschiedenartige, mit den Elektroantrieben zusammenwirkende Getriebe, wie zum Beispiel Wischergestänge. Bei Heckscheibenwischern an Kraftfahrzeugen kommt heute meist ein Einzelwischer zum Einsatz, während zur Reinigung von Frontscheiben an Straßen- oder Schienenfahrzeugen zweiarmige Fensterscheibenwischer zum Einsatz kommen. Werden zum Antrieb der Frontscheibenwischer zwei Motoren eingesetzt, sind für die Antriebe in der Regel unterschiedlich ausgeführte Varianten sowohl auf der Fahrer- als auch auf der Beifahrerseite des Fahrzeugs erforderlich.

### Stand der Technik

DE 196 42 667 A1 bezieht sich auf eine Lagerung für einen Wischerantrieb. Eine Wischeranlage an einem Fahrzeug wird mittels eines Wischerantriebes angetrieben. Die Wischeranlage umfaßt eine Rohrplatine, welche den Wischerantrieb mit einer in einem Lagerstutzen geführten Antriebswelle aufnimmt. Der Wischerantrieb ist gemäß dieser Lösung mit dem Lagerstutzen in ein an der Rohrplatine angeordnetes rohrförmiges Element eingesteckt. Das rohrförmige Element wird an der Rohrplatine angeformt, wobei der Lagerstutzen des Wischerantriebes durch die Rohrplatine gesteckt wird. Der Wischerantrieb ist in Umfangsrichtung durch Kraftschluß zwischen dem Lagerstutzen und dem rohrförmigen Element auf der Rohrplatine fixiert, kann jedoch auch durch Formschluß in Umfangsrichtung zwischen dem Lagerstutzen und dem rohrförmigen Element fixiert sein.

Das rohrförmige Element kann eine von der Kreisform abweichende, insbesondere polygonförmige oder unrunde Innenkontur aufweisen, die mit einer passenden Außenkontur des Lagerstutzens korrespondiert. Eine Fixierung zwischen dem Lagerstutzen des Wischerantriebes und dem rohrförmigen Element kann auch über eine Verzahnung erfolgen.

Die in DE 196 42 667 A1 dargestellte Lösung erfordert zwei konstruktiv unterschiedlich ausgeführte Varianten für die Fahrer- bzw. Beifahrerseite eines Fahrzeuges bzw. eines Schienenfahrzeuges sowie an die konstruktiv unterschiedlich ausgeführte Variante angepaßte Gestänge, die ebenfalls nicht spiegelsymmetrisch sind. Dies erfordert die Bereitstellung mindestens zweier Varianten von Wischgestängen bzw. Frontwischerantrieben oder Scheinwerferwischerantrieben für die Fahrer- bzw. für die Beifahrerseite.

Aufgrund des zwangsweisen, prinzipienbedingten Versatzes von Antriebs- und Antriebsachse eines Schneckengetriebes ist es erforderlich, sowohl für die Fahrer- als auch für die Beifahrerseite unterschiedliche Aufnahmen für diese Getriebebauart zu schaffen. Darüber hinaus benötigen Schneckengetriebe aufgrund des zwangsweisen Versatzes von Antriebsund Abtriebswelle relativ viel Bauraum.

### Darstellung der Erfindung

Mit der erfindungsgemäß vorgeschlagenen Lösung wird ein Wischerantrieb bereitgestellt, der sich insbesondere in Hohlwellen integrieren läßt. Aufgrund des spiegelsymmetrischen Aufbaus des vorgeschlagenen Wischerantriebes liegt die Abtriebsachse dieses Wischerantriebes in der Spiegelebene bzw. die Abtriebsachse im Zentrum des rotationssymmetrischen Bauteils. Wird die Abtriebsachse des Wischerantriebes insbesondere direkt zum Antrieb eines Wischers oder eines Wischerarmes eingesetzt, entsteht ein extrem kompakt bauender Wischerdirektantrieb (WDA). Der spiegelsymmetrische Aufbau des erfindungsgemäß vorgeschlagenen Wischerantriebes bietet erhebliche Vorteile hinsichtlich des beanspruchten Einbauraumes und ermöglicht Kosteneinsparungen.

Werden Zweimotorenwischeranlagen bzw. die oben erwähnten Wischerdirektantriebe eingesetzt, lassen sich für die Fahrer- und die Beifahrerseite identische Antriebe einsetzen. Dies bedeutet, daß lediglich ein Bauteil gefertigt, gekennzeichnet, gelagert, verpackt und transportiert werden muß, was neben den Fertigungskosten die Logistikkosten erheblich reduziert. Insbesondere lassen sich die karosserieseitigen Anschlußstellen für rotations- bzw. spiegelsymmetrische Wischerantriebe (oder auch Wischerdirektantriebe) standardisieren, so daß identische Flanschbilderbohrungen bzw. Aufnahmeflächen vorgesehen werden können, die auf fahrer- bzw. beifahrerseitiger Montagestelle des Wischerantriebes identisch sind. Daneben können auch die elektrischen Verbindungen bzw. die Elektronik der Antriebe, Stecker, Steuer und Regelungselektronik sowie die Anbindung an das fahrzeugeigene Bordnetz bzw. das fahrzeugeigene Bussystem (CAN-Bus) identisch ausgelegt werden.

Das Anbindungskonzept hinsichtlich der Verwendung spiegelsymmetrisch aufgebauter Wischerantriebe bzw. Wischerdirektantriebe kann standardisiert und damit die Applikationskonstruktion - etwa beim Automobilhersteller - und der Einbau wesentlich vereinfacht werden. Rationalisierungseffekte bzw. Rationalisierungspotential bei der erfindungsgemäß vorgeschlagenen Lösung sind vor allem darin zu erblicken, daß durch die Verwendung gleicher Bauweisen für verschiedene Antriebe - seien es Front- und Heckwischer, seien es Scheinwerferwischer - auf identische Bauteile zurückgegriffen werden kann. Handelt es sich beim eingesetzten Wischerantrieb um ein rotationssymmetrisches Bauteil und eine lernfähige Elektronik, die optional eine Positionserfassung umfassen kann, lassen sich bei allen Wischerantrieben zusätzliche Vereinfachungen beim Einbau realisieren, da dann die Lage von Antrieb und Wischhebel bzw. einer anderen Wischarmkomponente zueinander beim Zusammenbau beliebig ist. Dies bedeutet hinsichtlich des Einbaus in der Endmontage eine erhebliche Montageerleichterung, da einerseits eine geringere Einbau- und ein geringere Taktzeit erreichbar ist und andererseits weniger Einbaufehler auftreten können.

### Zeichnung

Anhand der Zeichnung wird die Erfindung nachstehend eingehender beschrieben.

Es zeigt:
- Figuren 1.1 bis 1.3: eine Draufsicht, eine Seitenansicht und eine Schnittdarstellung eines rotationssymmetrischen Wischerantriebes,
- Figur 2: einen Schnitt durch ein platzsparend aufgebautes rotationssymmetrisches Planetengetriebe,
- Figur 3: ein rotationssymmetrisch aufgebautes Wellgetriebe,
- Figur 4: eine schematische Darstellung eines Kreisschubgetriebes mit einer Hohlverzahnung, die mit einem Abtriebsstirnrad zusammenarbeitet,
- Figur 5: ein axiales Taumelscheibengetriebe und die
- Figuren 6.1 u. 6.2: ein Kronradgetriebe mit Geradverzahnung

### Ausführungsvarianten

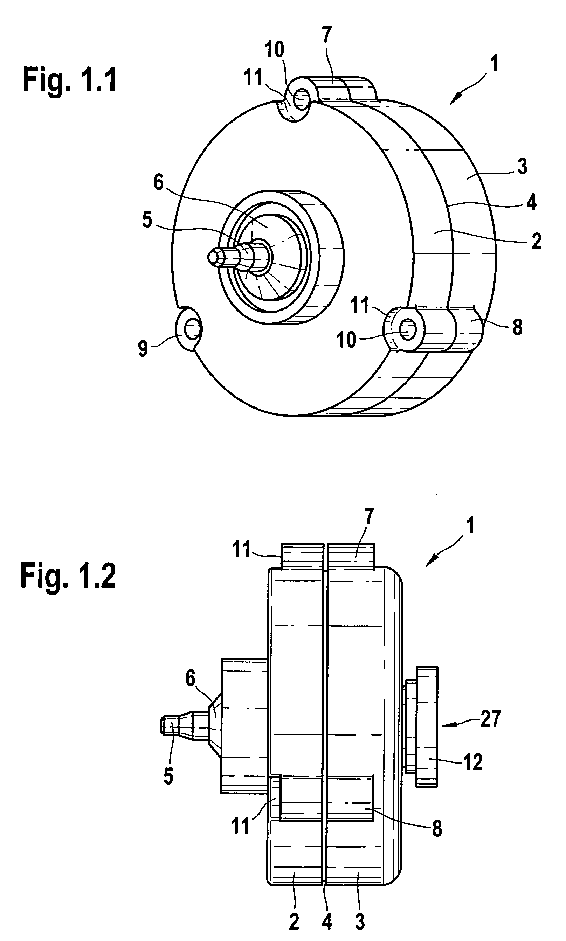

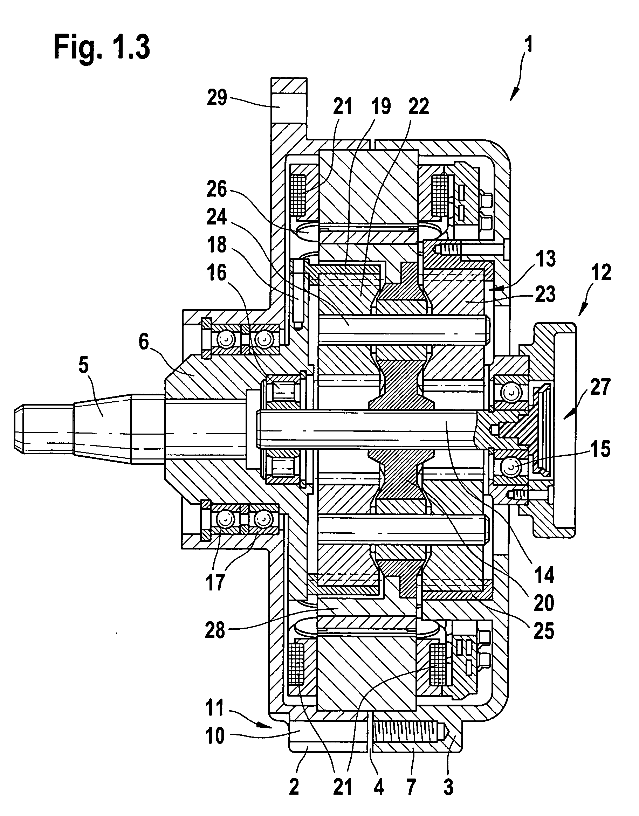

Figur 1.1 bis 1.3 zeigt eine Draufsicht, eine Seitenansicht und eine Rückansicht eines rotationssymmetrischen Wischerantriebes.

Gemäß dieser Ausführung der erfindungsgemäß vorgeschlagenen Lösung umfaßt eine rotationssymmetrisch ausgebildete Antriebseinheit 1 einen BPM-Motor (Brushless Permanent Magnet), bei dem es sich um einen elektronisch kommutierten, ohne Bürsten arbeitenden Elektromotor mit Permanentmagneten ohne geschaltete Reluktanz handelt. Elektronisch kommutierte (EC-Motoren) sind als rotationssymmetrische Antriebseinheiten 1 besonders interessant, weil alternative Bauformen möglich sind, die oft interessant sind wegen des zur Verfügung stehenden Bauraumes. So lassen sich diese rotationssymmetrischen Antriebe 1 relativ flach bei großem Durchmesser ausbilden. Die Elektronik solcher EC-Motoren ist sehr einfach mit den Datenbussen (CAN-Datenbussen) des Kraftfahrzeuges verbindbar; es entsteht kein zusätzlicher Schaltungsaufwand. Da die EC-Motoren aufgrund ihres Konstruktionsprinzipes keine Bürsten aufweisen, stellt sich demzufolge kein Verschleiß an diesen Bauteilen ein, was vorteilhaft bei häufig laufenden Motoren ist. Ferner entsteht aufgrund der fehlenden Bürsten an solcherart ausgebildeten, elektrisch kommutierenden Motoren keine Funkenbildung, was zu Abrasion, Verschleiß und damit zu vorzeitigem Ausfall bisher eingesetzter Antriebe führt. Aufgrund des Einsatzes von EC-Motoren wird eine Funkenbildung vermieden. Da aufgrund fehlender Funkenbildung an EC-Motoren keine Funkwellen auftreten, stellen EC-Motoren auch keine Störstrahlungsquellen dar. Ferner ist aufgrund der fehlenden Funkenbildung an EC-Motoren deren elektromagnetische Verträglichkeit (EMV) erheblich günstiger, verglichen mit Bürsten aufweisenden elektrischen Antrieben

Der rotationssymmetrische Antrieb 1 umfaßt eine erste Gehäuseschale 2 und eine zweite Gehäuseschale 3, die entlang einer ringförmig ausgebildeten Fuge 4 miteinander verbunden sind. Die Abtriebswelle des rotationssymmetrischen Antriebes 1 ist mit Bezugszeichen 5 gekennzeichnet und durchsetzt die erste Gehäuseschale 2. Die Abtriebswelle 5 des rotationssymmetrischen Antriebseinheit 1 ist von einer Abtriebshohlwelle 6 umschlossen. An der Außenumfangsfläche der Gehäuseschalen 2 und 3 sind in der Ausführungsvariante der rotationssymmetrischen Antriebseinheit 1 gemäß der Darstellung in Figur 1.1 drei um einen Winkel von etwa 120° zueinander versetzt ausgebildete Verbindungsstellen 7, 8 und 9 angeordnet. Die Verbindungsstellen 7, 8 und 9 liegen jeweils miteinander fluchtend in einem Winkel von 120° zueinander versetzt an den Außenumfängen sowohl der ersten Gehäuseschale 2 als auch der zweiten Gehäuseschale 3. Die Verbindungsstellen 7, 8 und 9 umfassen jeweils eine Bohrung 10 sowie fluchtend zu den Verbindungsstellen 7, 8 und 9 an der ersten Gehäuseschale 1 ausgebildete Aussparungen 11.

Aus der Seitenansicht der rotationssymmetrischen Antriebseinheit 1 gemäß der Darstellung in Figur 1.2 geht hervor, daß an der Rückseite der zweiten Gehäuseschale 3 ein Sensorelement 12 angeordnet ist. Dieses Sensorelement 12 kann beispielsweise als ein AMR-Sensorelement ausgebildet sein, welches gleichzeitig eine rotationssymmetrisch liegende Anschlußstelle 27 für eine Steuer- und Regelungselektronik darstellt, die in der Seitenansicht gemäß Figur 1.2 angedeutet ist. Ist die mit der rotationssymmetrischen Antriebseinheit 1 verbindbare Steuer- und Regelungselektronik als eine lemfähige Elektronik (optional mit Positionserfassung) ausgebildet, können bei Einbau der in Figur 1.2 dargestellten rotationssymmetrischen Antriebseinheit 1 zusätzliche Vereinfachungen beim Einbau realisiert werden, da die Lage der rotationssymmetrischen Antriebseinheit 1 und die Lage der Wischerkomponente, beispielsweise eines Wischerhebels, zueinander beim Zusammenbau beliebig sein können. Dies stellt eine erhebliche Montageerleichterung beim Einbau dar, da sich dadurch geringere Einbau- bzw. Taktzeiten und weniger Einbaufehler durch Abstimmung der Lage von Antriebseinheit und Wischhebel zueinander erzielen lassen.

Aus der Seitenansicht gemäß Figur 1.2 der rotationssymmetrischen Antriebseinheit 1 geht darüber hinaus hervor, daß im Bereich einer Stirnseite der ersten Gehäuseschale 2 in Umfangsrichtung der ersten Gehäuseschale 2 gesehen, zu den Verbindungsstellen 7, 8 und 9 korrespondierend ausgebildete Anlageflächen angeordnet sind. Über diese Anlagefläche kann eine Montage der rotationssymmetrischen Antriebseinheit 1 an einer Spritzwand bzw. einer Stirnwand auf Fahrer- und Beifahrerseite einer Kfz-Karosserie erfolgen, gegebenenfalls unter Zwischenschaltung eines in Figur 1.2 nicht dargestellten Dichtelementes.

Figur 1.3 zeigt eine Schnittdarstellung eines rotationssymmetrischen Antriebes, der als Wischerantrieb eingesetzt werden kann.

Aus der Schnittdarstellung gemäß Figur 1.3 geht hervor, daß die erste Gehäuseschale 2 und die zweite Gehäuseschale 3 der rotationssymmetrischen Antriebseinheit 1 ein integriertes Planetengetriebe 13 umschließen. Eine Welle 14 ist in einem ersten Lager 15 und einem zweiten Lager 16 drehbar aufgenommen. Das erste Lager 15 befindet sich in der zweiten Gehäuseschale 3, während das zweite Lager 16 im Inneren einer Abtriebshohlwelle 6 aufgenommen ist.

An der Außenfläche der ersten Gehäuseschale 2 und der zweiten Gehäuseschale 3 befinden sich die in den Figuren 1.1 bzw. 1.2 dargestellten Verbindungsstellen 7, 8, 9, von denen hier lediglich die erste Verbindungsstelle 7 dargestellt ist. Diese umfaßt eine Bohrung 10, die sich durch die erste Verbindungsstelle 7 in der ersten und in der zweiten Gehäuseschale 2 bzw. 3 erstreckt und an der Stirnseite der ersten Gehäuseschale 2 in eine Aussparung 11 übergeht. Die Verbindungsstellen der miteinander an der Fuge 4 gefügten ersten und zweiten Gehäuseschale können auch, wie im oberen Bereich von Figur 1.3 dargestellt, als Flanschbohrungen ausgebildet sein. Entsprechend des Flanschbildes der rotationssymmetrischen Antriebseinheit 1 gemäß der Darstellung in Figur 1.3 können Verbindungsstellen 29 der rotationssymmetrischen Antriebseinheit 1 mit der Kfz-Karosserie standardisiert ausgeführt werden und auf Fahrer- und Beifahrerseite der Kfz-Karosserie identisch ausgebildet werden, was den Montageaufwand erleichtert und ferner eine größere Freiheit bei der Handhabung der rotationssymmetrischen Antriebseinheit 1 bei deren Montage in dem Bereich, in welchem Motor und Fahrgastraum eines Fahrzeugs aneinandergrenzen, gestattet. Ferner läßt sich die Handhabung einer rotationssymmetrischen Antriebseinheit 1 bei der Montage an einer Fahrzeugscheibe erheblich verbessern.

Die Abtriebshohlwelle 6 ihrerseits ist mittels eines Hohlwellenlagers 17 in der ersten Gehäuseschale 2 gelagert. Über eine Verstiftung 18 ist an der Abtriebshohlwelle 6 ein erster Zahnkranz 19 drehfest aufgenommen, der mit einer kranzförmig verlaufenden Innenverzahnung ausgeführt ist.

Die Innenverzahnung des ersten Zahnkranzes 19 kämmt mit ersten Planetenrädern 22, die an einer Planetenradwelle 24 aufgenommen sind. Die Planetenradwelle 24 ihrerseits ist in einer an der Welle 14 aufgenommenen Trägerscheibe 20 gelagert, die an ihrem Außenumfang mit einem als Rotor fungierenden, mit Magneten ausgestatteten Kranz 28 versehen ist. Der Kranz 28 bildet den Rotor. Der Stator der rotationssymmetrischen Antriebseinheit 1 gemäß der Darstellung in Figur 1.3 wird durch im Inneren der ersten Gehäuseschale 2 drehfest angeordnete Wicklungen 21 gebildet. Auf dem den ersten Planetenrädern 22 gegenüberliegenden Ende der Planetenradwelle 24 sind zweite Planetenräder 23 aufgenommen, die in einem etwas vergrößerten Durchmesser ausgeführt sind. Die zweiten Planetenräder 23 können jedoch auch im zu den ersten Planetenrädern 23 korrespondierenden Durchmesser oder einem anderen Durchmesser ausgeführt sein. Die zweiten Planetenräder 23 der rotationssymmetrischen Antriebseinheit 1 gemäß der Darstellung in Figur 1.3 kämmen mit einem innenverzahnten zweiten Zahnkranz 25. Der zweite Zahnkranz 25 ist hinsichtlich seines Teilkreisdurchmessers auf den jeweiligen Durchmesser der zweiten Planetenräder 23 abgestimmt. Der zweite Zahnkranz 25 ist drehfest innerhalb der zweiten Gehäuseschale 3 aufgenommen. Mit Bezugszeichen 26 ist ein Rückschlußring für die Abtriebshohlwelle 6 bezeichnet.

Gemäß der Ausführungsvariante der rotationssymmetrischen Antriebseinheit 1 nach Figur 1.3 befindet sich innerhalb des Sensorelementes 12 an der rückwärtigen Stirnseite der zweiten Gehäuseschale 3 der Anschluß 27 für die Ansteuerelektronik. Dieser liegt damit ebenfalls koaxial zur Symmetrieachse der Abtriebswelle 5 und der Welle 14 des integrierten Planetengetriebes 13, so daß die Ansteuerelektronik für die rotationssymmetrische Antriebseinheit 1 gemäß der Schnittdarstellung in Figur 1.3 ohne zusätzlichen Aufwand auf Fahrer- und Beifahrerseite identisch ausgebildet werden kann.

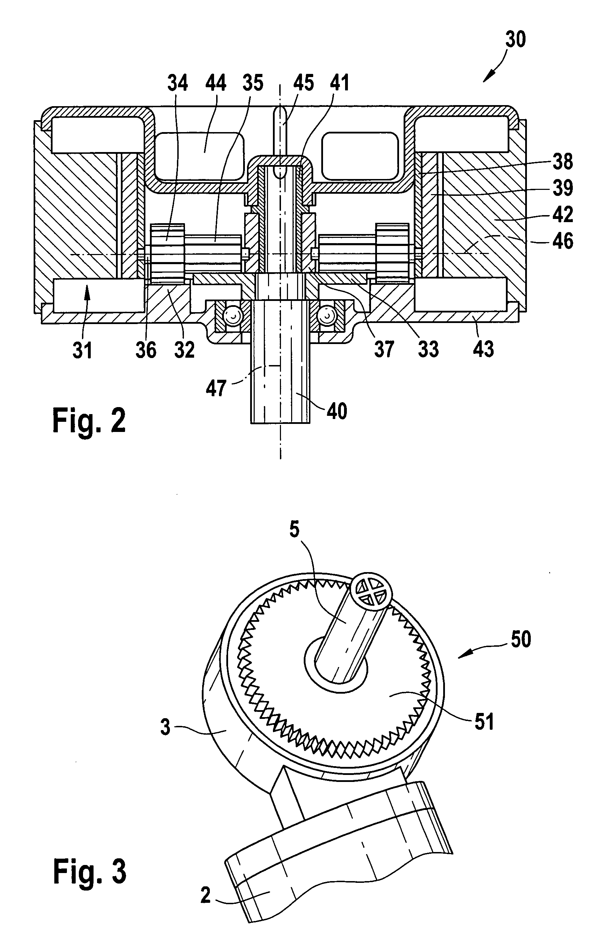

Figur 2 zeigt einen Querschnitt durch ein platzsparend aufgebautes rotationssymmetrisches Kronradgetriebe.

Die rotationssymmetrisch ausgebildete Antriebseinheit 30 ist gemäß der Ausführungsvariante nach Figur 2 als Elektroantrieb mit integriertem Planetengetriebe ausgebildet. Das Planetengetriebe 30 umfaßt gemäß dieser Ausführungsvariante einer rotationssymmetrischen Antriebseinheit Kronräder.

Das Planetengetriebe 30 mit Kronrädern umfaßt einen Elektroantrieb 31. Der Elektroantrieb 31 umfaßt einen Stator 42, dem ein Rotor 39 gegenüberliegt. Ein erstes Planetenrad 34 und ein zweites Planetenrad 35 sind auf einer gemeinsamen Planetenradwelle 36 aufgenommen. Die Planetenradwelle 36 ist einerseits in einem Mantel 38 und andererseits in einer Nabe 37 drehbar aufgenommen. Die ersten Planetenräder 34 kämmen mit der Verzahnung eines ersten Kronrades 32, während die zweiten Planetenräder 35 mit der Verzahnung eines zweiten Kronrades 33 kämmen. Das erste Kronrad 32 ist innerhalb eines Gehäusedeckels 43 integriert, innerhalb dessen eine Abtriebswelle 40, aufgenommen durch ein Wälzlager, drehbar angeordnet ist. Das erste Kronrad 32 dient als Antriebskronrad, während das zweite Kronrad 33 drehfest an der Abtriebswelle 40 aufgenommen ist und über die als Abtriebsritzel fungierenden, an der gemeinsamen Planetenradwelle 36 aufgenommenen zweiten Planetenräder 35 angetrieben wird. Das zweite Kronrad 33 rotiert mit der Abtriebsdrehzahl. Die Drehachse, um welche die ersten und zweiten Planetenräder 34 bzw. 35 rotieren, ist mit Bezugszeichen 46 gekennzeichnet, während dazu senkrecht verlaufend eine zweite Drehachse der Abtriebswelle 40, die mit der Drehachse des zweiten Kronrades 33 zusammenfällt, durch Bezugszeichen 47 gekennzeichnet ist. Die erste Drehachse 46 fällt mit der Symmetrieachse der Planetenradwelle 36 zusammen, während die zweite Drehachse 47 mit der Symmetrielinie der Abtriebswelle 40 zusammenfällt.

In einem dem Gehäusedeckel 43 gegenüberliegenden weiteren Deckelelement sind Steuereinheiten 44 gelagert. An diesem Deckelelement ist ebenfalls eine Kühlrippe 45 vorgesehen, welche zur Abfuhr der entstehenden Wärme dient. Ferner ist im weiteren Deckelelement eine Lagerhülse 41 aufgenommen, die die zweite Drehachse 47 umschließt.

Figur 3 ist eine schematische Darstellung eines rotationssymmetrisch bauenden Wellgetriebes zu entnehmen.

Neben der in Figur 1 dargestellten Ausbildung einer rotationssymmetrischen Antriebseinheit mit einem integrierten Planetengetriebe 13 kann die rotationssymmetrisch ausgebildete Antriebseinheit 1 ein Wellgetriebe 50 umfassen. Wellgetriebe 50 eignen sich insbesondere für rotationssymmetrisch bauende Antriebe, weil sie selbst symmetrisch aufgebaut sind, wobei An- und Abtriebsachse koaxial zueinander verlaufen. Wellgetriebe 50 bauen sehr kompakt, wobei ein sehr breites Untersetzungsband zur Verfügung gestellt wird (ab ca. 1:30 bis ca. 1:300). In der Regel sind Wellgetriebe 50 selbsthemmend ausgebildet. Auch diese Ausführungsvariante einer rotationssymmetrischen Antriebseinheit 1 gestattet identische Anschlußstellen an der vorderen Spritzwand einer Kfz-Karosserie und erhöht die Freiheitsgrade bei der Montage als Wischerantrieb erheblich.

Das Wellgetriebe 50 gemäß der schematischen Wiedergabe in Figur 3 umfaßt eine Abtriebswelle 5, die koaxial zur Motorwelle eines in Figur 3 nicht dargestellten elektrischen Antriebes liegt. Das Wellgetriebe 50 umfaßt eine erste Gehäuseschale 2 sowie eine zweite Gehäuseschale 3, wobei in der Darstellung gemäß Figur 3 die erste Gehäuseschale 2 von der zweiten Gehäuseschale 3 abgenommen ist. Die an einer Karosseriewandung unterhalb der Windschutzscheibe des Kraftfahrzeuges anliegende Stirnseite des Wellgetriebes 50 ist mit Bezugszeichen 51 gekennzeichnet.

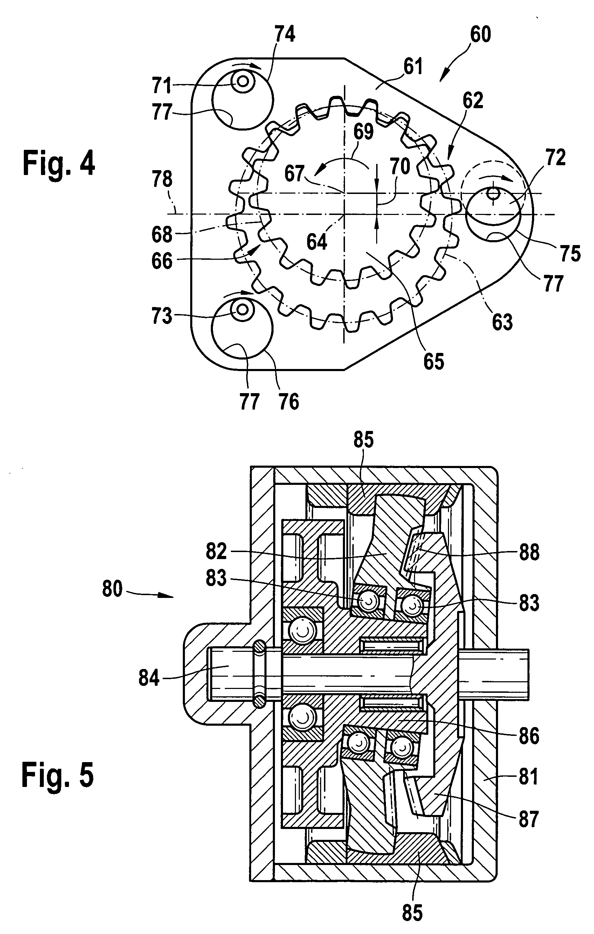

Figur 4 ist eine schematische Darstellung eines Kreisschubgetriebes mit einer Hohlradverzahnung zu entnehmen, die mit einem Abtriebsstirnrad zusammenarbeitet.

Ein Kreisschubgetriebe 60 umfaßt eine Schubplatte 61. In der Schubplatte 61 ist eine Hohlradverzahnung 62 ausgeführt, deren Teilkreis mit Bezugszeichen 63 gekennzeichnet ist. Das Zentrum der Hohlradverzahnung 62 im Inneren der Schubplatte 61 ist mit Bezugszeichen 64 gekennzeichnet. Die Hohlradverzahnung 62 der Schubplatte 61 kämmt mit einer Abtriebswelle 65, deren Rotationsachse 67 in einem Abstand 70 exzentrisch zum Zentrum 64 der Hohlradverzahnung 62 angeordnet ist. Der Drehsinn der Abtriebswelle 65 in Bezug auf ihre Rotationsachse 67 ist mit Pfeil 69 bezeichnet. An der Außenseite der Abtriebswelle 65 ist eine Außenverzahnung 66 ausgebildet, deren Teilkreis mit Bezugszeichen 68 gekennzeichnet ist.

Die Schubplatte 61 des Kreisschubgetriebes 60 ist an einer ersten Kurbel 71, einer zweiten Kurbel 72 sowie an einer dritten Kurbel 73 bewegbar aufgenommen. Die Kurbelzapfen der Kurbeln 71, 72, 73 liegen jeweils an Innenseiten 77 von Öffnungen 74, 75, 76 - die als Bohrungen beschaffen sind - der Schubplatte 61 an. Der Drehsinn, in welchem die Kurbeln 71, 72, 73 bewegt werden, ist durch die Pfeile oberhalb der Kurbelzapfen der Kurbeln 71, 72, 73 in Figur 4 angedeutet. Mit Bezugszeichen 78 ist eine Spiegelebene gekennzeichnet, die durch das Zentrum 64 der Hohlradverzahnung 62 in der Schubplatte 61 verläuft und durch einen Exzenterachsenmittelpunkt einer der drei Kurbeln 71, 72, 73 verläuft, in diesem Falle durch den Exzenterachsenmittelpunkt der zweiten Kurbel 72, die in diesem Falle als Antriebskurbel dient.

Mit dem in Figur 4 schematisch dargestellten Kreisschubgetriebe 60 läßt sich eine hohe Untersetzung erreichen, so daß die Verwendung eines Gleichstrom-Motors (DC-Antrieb) ermöglicht wird und lang ausgebildete Antriebsstränge mit einer Vielzahl von Übertragungskomponenten eingespart werden können. Dies ist günstig hinsichtlich der Bauraumbeanspruchung eines Wischanlagenantriebes unterhalb der Windschutzscheibe bei Applikationen in Kraftfahrzeugen.

Figur 5 zeigt ein axiales Taumelscheibengetriebe.

Ein in Figur 5 mit Bezugszeichen 80 bezeichnetes axiales Taumelscheibengetriebe umfaßt ein Gehäuse 81, welches die Getriebekomponenten aufnimmt. Das Gehäuse 81 des axialen Taumelgetriebes 80 umschließt eine Taumelscheibe 82. Die Taumelscheibe 82 ist einerseits in einer eine Nut enthaltenden gehäusefesten Taumelscheibenführung 85 geführt, welche der Taumelscheibe 82 ihre Bewegung aufzwingt. Die Taumelscheibe 82 ist darüber hinaus mittels Taumelscheibenlager 83 auf einem Antrieb 86 mit integriertem abgewinkelt ausgebildeten Exzenter aufgenommen. Die Taumelscheibe, welche an einer einem Abtriebsrad 87 zuweisenden Stirnseite mit einer Verzahnung ausgebildet ist, steht mit diesem in Verzahnungseingriff 88, wodurch die Abtriebsachse 84 bewegt wird. Das axiale Taumelscheiben- oder Taumelradgetriebe 80 besitzt ähnliche Charakteristika wie ein radial wirkendes Taumelscheiben- oder Taumelradgetriebe. Unter Taumelscheiben- bzw. Taumelradgetrieben werden hier sowohl axiale wie auch radiale Taumelscheibengetriebe verstanden. Beiden Ausführungsvarianten eines Taumelscheiben- bzw. Taumelradgetriebes ist gemeinsam, daß sie hohe Leistungsdichte, verbunden mit einer großen Untersetzungsvielfalt aufweisen. Ferner weisen Taumelscheiben- bzw. Taumelradgetriebe 80 einen extrem einfachen Aufbau, der sie sehr robust macht, sowie einen guten Wirkungsgrad auf. Danach sind Taumelrad- bzw. Taumelscheibengetriebe 80 rotationssymmetrisch aufgebaut, so daß sie sich sehr gut in das Innere einer Abtriebshohlwelle 6 (vgl. Figur 1.3) integrieren lassen.

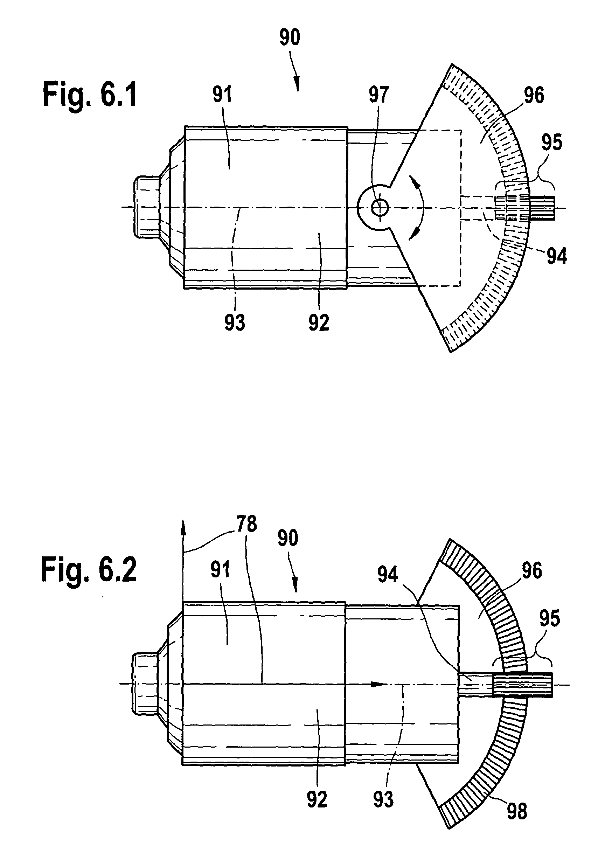

Den Figuren 6.1 bzw. 6.2 ist ein gradverzahntes Kronradgetriebe zu entnehmen.

In dieser Ausführungsvariante einer Antriebseinheit für Wischanlagen läßt sich eine rotationssymmetrische Ausbildung eines Wischanlagenantriebes prinzipbedingt nicht erreichen, da die Ritzelwelle 95 des Elektroantriebes 91 in einem Winkel von 90° - hier senkrecht zur Zeichenebene verlaufend - zur Drehachse 97 eines Kronradsegmentes 98 verläuft. Die in den Figuren 6.1 bzw. 6.2 dargestellte Kronradgetriebeanordnung 90 hat jedoch aufgrund ihrer kompakten Bauweise erhebliche Vorteile gegenüber dem Einsatz eines Schneckengetriebes, an dem Antriebs- und Abtriebsachse prinzipbedingt ebenfalls zwangsweise um einen Winkel von 90° zueinander versetzt angeordnet sind. Durch die Anlenkung des Kronradsegmentes 96 unmittelbar am Gehäuse 92 des Elektroantriebes 91 wird eine sehr kompakte Bauform erreicht. Ist eine Verzahnung 98 am Kronradsegment 96 darüber hinaus als Gradverzahnung ausgebildet, kann die Motor/Getriebeeinheit 90, 91 spiegelsymmetrisch zur in Figur 6.2 dargestellten Spiegelebene 78 ausgebildet werden. Wenngleich nicht rotationssymmetrisch aufgebaut, vgl. die Motor/Getriebeeinheiten gemäß der Figuren 1.1, 1.2, 1.3, 2, 3 und 5, so bietet die in Figur 6.1 bzw. 6.2 dargestellte Anordnung einer Motor-Getriebeeinheit für Wischanlagen den Vorteil, daß auf einer Fahrer- bzw. einer Beifahrerseite in Bezug auf eine Spritzwand unterhalb des Montagebereiches der Windschutzscheibe einer Kfz-Karosserie lediglich eine Verdrehung der Motor/Getriebeanordnung 90 bzw. 91 um deren Symmetrieachse 93 erforderlich ist, was deren Einbau erheblich vereinfacht. Das Kronradgetriebe 90 umfaßt einen Elektroantrieb 91, der als DC-Motor, als Asynchronoder als Transversalflußmotor ausgebildet werden kann. Dieser ist von einem Gehäuse 92 umschlossen, welches rotationssymmetrisch zur Symmetrieachse 93 ausgebildet ist. Aufgrund der 90°-Orientierung der Drehachse 97, welche die Abtriebsachse des Kronradgetriebes 90 darstellt, und der Ritzelwelle 94 des Elektroantriebes 91, läßt sich jedoch ein spiegelsymmetrischer Aufbau dieser Motor/Getriebeanordnung erreichen. Das Kronradsegment 96, welches um den Anlenkpunkt 97 schwenkt, der mit der Abtriebswelle des Kronradgetriebes 90 zusammenfällt, überstreicht einen Schwenkwinkel von etwa 100° bis 120°. Ist das Kronradsegment 96 mit einer Verzahnung 98 versehen, wird diese vorzugsweise als Gradverzahnung ausgebildet, welche mit dem an der Motorwelle 94 ausgeführten Ritzel 95 kämmt.

Die in den Figuren 1.1, 1.2, 1.3 sowie 3 und 5 dargestellten Antriebe sind im wesentlichen rotationssymmetrisch ausgebildet. Diese Ausführungsvarianten der erfindungsgemäß vorgeschlagenen Wischanlagenantriebe erleichtern die Anbindung an die Fahrzeugkarosserie, da die Anbindungspunkte (vgl. Position 7, 8 und 9 in Figuren 1.1, 1.2 und 1.3) einfach kopiert werden können. Diese können demnach auf Fahrer- und Beifahrerseite unterhalb einer Windschutzscheibe im Karosseriebereich einer Fahrzeugkarosserie identisch ausgebildet werden. Eine standardisierte Anbindung benötigt wenig Applikationsaufwand. Darüber hinaus können bei Zuordnung lemfähiger Elektronikkomponenten zu den rotationssymmetrisch ausgebildeten Antriebseinheiten die Freiheitsgrade hinsichtlich einer Montage der Antriebe in Bezug auf Wischkomponenten, wie zum Beispiel Wischhebel, erheblich vereinfacht werden, was eine erhebliche Reduzierung von Ein- und Zusammenbauzeiten bei der Montage der Wischerkomponenten einer Wischanlage nach sich zieht. Im Falle des Einsatzes lernfähiger Elektroniken, die mit den Gehäusen 2 bzw. 3 der in den Figuren 1.1, 1.2, 1.3, 2, 3 und 5 eingesetzten Wischantrieben eingesetzt werden können, ist die Lage der Antriebseinheit und der über diesen angetriebenen Wischhebel einer Wischanlage zueinander beim Zusammenbau von untergeordneter Bedeutung, was eine erhebliche Montageerleichterung mit sich bringt. Darüber hinaus können die rotationssymmetrisch ausgebildeten Antriebseinheiten, deren Abtriebswelle 5 direkt zu einem Antrieb eines Wischarms eingesetzt werden kann, als Wischerdirektantriebe eingesetzt werden. Bei der Verwendung rotationssymmetrisch ausgebildeter Antriebe 1 bei Zweimotorenanlagen bzw. bei Wischerdirektantrieben können für Fahrer- und Beifahrerseite gleiche Antriebe eingesetzt werden. Dies bedeutet, daß auf Fahrer- und Beifahrerseite gleiche Komponenten, gleiche Flanschbilder und gleiche standardisierte Anschlußstellen ausgebildet werden können. Auch die Elektrik bzw. die Elektronik der Antriebe hinsichtlich Steckerauslegung, Steuer- und Regelungselektronik sowie der Anbindung an das Fahrzeugbordnetz bzw. an ein Fahrzeugbussystem (CAN-Bus) läßt sich erheblich vereinfachen, da diese Schnittstellen sowie die verwendeten Komponenten identisch ausgelegt werden können.

Bei den in Figur 4 und 6.1 bzw. 6.2 dargestellten Ausführungsvarianten ist eine spiegelsymmetrische Anordnung einer Wischantriebseinheit möglich, wenn die Abtriebsachse - wie dargestellt - in der Spiegelebene 78 liegt. Damit läßt sich eine erhebliche Vereinfachung der Montage solcher spiegelsymmetrisch aufgebauter Wischerantriebseinheiten erreichen, da zur Montage auf der Fahrer- bzw. der Beifahrerseite unterhalb einer Windschutzscheibe im vorderen Bereich einer Kfz-Karosserie lediglich eine Verdrehung der Antriebseinheiten 60 bzw. 90 um ihre Symmetrieachsen (vgl. 93 gemäß der Figuren 6.1 bzw. 6.2) erforderlich ist und die sonstigen Anschlußkomponenten, wie zum Beispiel Anschlußstelle für Bordnetzspannung, Anschlußstelle des Bussystems (CAN-Datenbus), Steuer- und Regelelektronik, im übrigen identisch ausgelegt werden können.

### Bezugszeichenliste

- 1: rotationssymmetrische Antriebseinheit
- 2: erste Gehäuseschale
- 3: zweite Gehäuseschale
- 4: Fuge
- 5: Abtriebswelle
- 6: Abtriebshohlwelle
- 7: erste Verbindungsstelle
- 8: zweite Verbindungsstelle
- 9: dritte Verbindungsstelle
- 10: Bohrung
- 11: Aussparung in erster Gehäuseschale 2
- 12: Sensorelement
- 13: integriertes Planetengetriebe
- 14: Welle
- 15: erstes Lager
- 16: zweites Lager
- 17: Hohlwellenlager
- 18: Verstiftung
- 19: erster Zahnkranz
- 20: Trägerscheibe
- 21: Stator mit Wicklungen
- 22: erstes Planetenrad
- 23: zweites Planetenrad
- 24: Planetenachse
- 25: zweiter Zahnkranz
- 26: Rückschließring Hohlwelle
- 27: Anschluß Ansteuerelektronik
- 28: Rotorkranz
- 29: Verbindungsstellen
- 30: Planetengetriebe mit Kronrädern
- 31: Elektromotor
- 32: erstes Kronrad
- 33: zweites Kronrad
- 34: erstes Planetenrad
- 35: zweites Planetenrad
- 36: Planetenradwelle
- 37: Nabe
- 38: Mantel
- 39: Rotor
- 40: Abtriebswelle
- 41: Lagerhülse
- 42: Stator
- 43: Gehäusedeckel
- 44: Steuerelement
- 45: Kühlrippe
- 46: erste Drehachse
- 47: zweite Drehachse

- 50: Wellgetriebe
- 51: Stirnseite Wellgetriebe
- 60: Kreisschubgetriebe
- 61: Schubplatte
- 62: Hohlradverzahnung
- 63: Teilkreis Hohlradverzahnung
- 64: Zentrum Hohlradverzahnung
- 65: Abtriebswelle
- 66: Außenverzahnung
- 67: Rotationsachse der Außenverzahnung
- 68: Teilkreis
- 69: Drehsinn Abtriebswelle
- 70: Exzentrizität
- 71: erste Kurbel
- 72: zweite Kurbel
- 73: dritte Kurbel
- 74: erste Öffnung
- 75: zweite Öffnung
- 76: dritte Öffnung
- 77: Öffnungsinnenseite
- 78: Spiegelebene

- 80: axiales Taumelgetriebe
- 81: Gehäuse
- 82: Taumelscheibe
- 83: Taumelscheibenlager
- 84: Abtriebswelle
- 85: gehäusefeste Taumelscheibenführung
- 86: Antrieb mit integriertem abgewinkelten Exzenter
- 87: Abtriebsrad
- 88: Verzahnungseingriff

- 90: Kronradgetriebe
- 91: Elektroantrieb
- 92: Gehäuse
- 93: Symmetrieachse
- 94: Ritzelwelle Elektroantrieb
- 95: Ritzelabschnitt
- 96: Kronradsegment
- 97: Drehachse Kronradsegment (Abtriebswelle)
- 98: Innenverzahnung Kronradsegment

## Patentansprüche

1. Antriebseinheit für Wischanlagen mit von einem Gehäuse (2, 3; 91) umschlossenen Antriebsmotor, dem ein Getriebe (13, 30, 50, 60, 80, 90) zugeordnet ist, dessen Abtriebswelle (5, 40, 65, 97) Wischkomponenten antreibt und an dem Gehäuse (2, 3; 91) eine Anschlußstelle (27) für eine Ansteuer- und Regelelektronik sowie zur Anbindung an ein Bordnetz eines Fahrzeuges sowie Positionsgeber (12) vorgesehen sind, **dadurch gekennzeichnet, daß** die Abtriebswelle (5, 40) koaxial zur Motorwelle einer rotationssymmetrisch ausgeführten Motor- und Getriebeeinheit (1, 30, 50, 80) liegt oder die Symmetrieachse (93) der Motor- und Getriebeeinheit (60, 90) in einer Spiegelebene (78) liegt.

2. Antriebseinheit für Wischanlagen gemäß Anspruch 1, **dadurch gekennzeichnet, daß** an dem Gehäuse (2, 3, 91) standardisierte Schnittstellen (7, 8, 9) zur Anbindung an eine Fahrzeugkarosserie ausgeführt sind.

3. Antriebseinheit für Wischanlagen gemäß Anspruch 1, **dadurch gekennzeichnet, daß** die rotationssymmetrisch ausgebildete Motor- und Getriebeeinheit (1, 30, 50, 80) elektronisch kommutierte, bürstenlose Motoren mit Permanentmagneten und ein integriertes Getriebe (13, 30, 50, 60, 80) umfasst.

4. Antriebseinheit für Wischanlagen gemäß Anspruch 3, **dadurch gekennzeichnet, daß** das Getriebe ein in das Gehäuse (2, 3) integriertes Planetengetriebe (13, 30) ist.

5. Antriebseinheit für Wischanlagen gemäß Anspruch 3, **dadurch gekennzeichnet, daß** das Getriebe ein Wellgetriebe (50) mit koaxialen Antriebs- und Abtriebswellen (5) ist.

6. Antriebseinheit für Wischanlagen gemäß Anspruch 3, **dadurch gekennzeichnet, daß** das Getriebe ein Taumelgetriebe (80) ist, welches einen symmetrischen Aufbau aufweist und in eine Abtriebshohlwelle 6 integrierbar ist.

7. Antriebseinheit für Wischanlagen gemäß Anspruch 4, **dadurch gekennzeichnet, daß** das Planetengetriebe (30) Kronräder (32, 33) sowie als Ritzel ausgebildete Planetenräder (34, 37) umfaßt, die an einer gemeinsamen Planetenradwelle (36) aufgenommen sind.

8. Antriebseinheit für Wischanlagen gemäß Anspruch 1, **dadurch gekennzeichnet, daß** bei Motor/Getriebeeinheiten (60, 90) mit einer in einer Spiegelebene (78) liegenden Abtriebswelle (65, 97) das Getriebe als Kreisschubgetriebe (60) ausgeführt ist.

9. Antriebseinheit für Wischanlagen gemäß Anspruch 8, **dadurch gekennzeichnet, daß** das Kreisschubgetriebe (60) eine Hohlradverzahnung (62) umfaßt, die mit einer auf der Abtriebswelle (65) ausgeführten Verzahnung (66) kämmt.

10. Antriebseinheit für Wischanlagen gemäß Anspruch 9, **dadurch gekennzeichnet, daß** die Hohlradverzahnung (62) in einer Schubplatte (61) ausgeführt ist, welche durch Kurbeln (71, 72, 73), deren Zapfen auf einer Innenseite (77) von den Kurbeln (71, 72, 73) jeweils zugeordneten Öffnungen (74, 75, 76) ablaufen, bewegt wird, wobei die in der Spiegelebene (78) liegende Kurbel (72) als Antriebskurbel (4) für die Schubplatte (61) dient.

11. Antriebseinheit für Wischanlagen gemäß Anspruch 1, **dadurch gekennzeichnet, daß** die Motor- und Getriebeeinheit ein Kronradgetriebe (90) umfaßt, dessen Symmetrieachse (93) in der Spiegelebene (78) des Kronradgetriebes (90) liegt.

12. Antriebseinheit für Wischanlagen gemäß Anspruch 1, **dadurch gekennzeichnet, daß** das Getriebe (13) in der Abtriebshohlwelle (6) eines Antriebsmotors aufgenommen ist.

13. Antriebseinheit für Wischanlagen gemäß Anspruch 1, **dadurch gekennzeichnet, daß** der elektrische Antrieb ein Gleichstrom-Motor (DC-Motor) ist.

14. Antriebseinheit für Wischanlagen gemäß Anspruch 1, **dadurch gekennzeichnet, daß** der elektrische Antrieb ein Asynchronmotor ist.

15. Antriebseinheit für Wischanlagen gemäß Anspruch 1, **dadurch gekennzeichnet, daß** der elektrische Antrieb ein Transversalflußmotor ist.

16. Antriebseinheit für Wischanlagen gemäß Anspruch 1, **dadurch gekennzeichnet, daß** an der rotationssymmetrischen Motor- und Getriebeeinheit (1, 30, 50, 80, 90) die Anschlußstelle (27) für die Ansteuerelektronik mit der Symmetrieachse (93) der rotationssymmetrischen Motor- und Getriebeeinheit (1, 30, 50, 80, 90) zusammenfällt.
